# EUROPEAN PATENT APPLICATION

(11) **EP 4 459 461 A1**
(43) Date of publication of application: **06.11.2024**
(21) Application number: 22922904.2
(22) Date of filing: 29.01.2022
(51) Int. Cl.: G06F 9/44, G06F 9/46

(54) **INFORMATION PROCESSING METHOD AND APPARATUS, AND COMPUTING DEVICE AND COMPUTER-READABLE MEDIUM**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN); LIAO, Liang, Beijing 100073 (CN); WENG, Changwei, Nanjing, Jiangsu 211100 (CN)
(74) Representative: Isarpatent
(86) International application number: PCT/CN2022/075081
(87) International publication number: WO 2023/142074

(57) **Abstract**

Provided are an information processing method and apparatus, and a computing device and a computer-readable medium. The method comprises: on the basis of an instruction input by a user, generating one workflow in an OT domain that is described using a common information model, wherein the workflow defines an operation that one work unit in the OT domain is to execute (202); converting the workflow into a function block program, which is described in a domain-specific language (204); and deploying the function block program, which is described in the domain-specific language, onto a main controller of the work unit during operation for execution, so as to control an OT device in the work unit to execute operations according to the workflow (206).

## Description

### TECHNICAL FIELD

Embodiments of this application relate to the field of information technologies, and in particular, to an information processing method and apparatus, a computing device, and a computer-readable medium.

### BACKGROUND

According to Gartner, an operational technology (Operational Technology, OT) is a collection of hardware and software that detects or triggers changes in processes or events in an enterprise by directly monitoring and/or controlling a physical device (referred to as an OT device). The OT uses a computer to monitor or change a physical state of a system such as an industrial control system (Industrial Control System, ICS). The industrial control system is a computer-based facility, a system, and a device configured to remotely monitor and/or control a critical industrial processes to implement a physical function. The term "OT" is used to distinguish the industrial control system from a traditional information technology (Information Technology, IT) system in terms of technical implementation and functions.

The integration of IT and OT domains is becoming increasingly important in a process of enterprise digital transformation. A to-be-solved problem is how enterprises can collect data from the OT domain and control OT domain processes in a way that is easy to understand rather than programmed by the IT domain.

Currently, there are a plurality of IT low-code development tools or platforms on a market. Some tools are targeted at Internet of Things usage scenarios and are aimed at experienced IT engineers, while OT engineers and junior IT engineers find it difficult to understand paradigms of the tools. However, some tools are more suitable for a low-code development scenario in the IT domain and are not well suited for the OT domain.

### SUMMARY

A brief overview of the present invention is given below to provide a basic understanding of certain aspects of the present invention. It should be understood that this summary is not an exhaustive overview of the present invention. It is not intended to determine key or important parts of the present invention, nor is it intended to limit the scope of the present invention. The purpose is merely to present some concepts in a simplified form as a prelude to the more detailed description that is discussed later.

According to one aspect of the present disclosure, an information processing method is provided. The method includes:
generating, based on an instruction input by a user, a workflow in an OT domain described by using a common information model, where the workflow defines an operation to be performed by a workcell in the OT domain;
converting the workflow into a function block program described in a domain specific language; and
deploying the function block program described in the domain specific language to runtime of a main controller of the workcell for execution, to control an OT device in the workcell to perform, based on the workflow, the operation.

According to another aspect of the present disclosure, an information processing method is provided. The method includes:
generating, based on an instruction input by a user, a workflow in an OT domain described by using a common information model, where the workflow defines an operation to be performed by a workcell in the OT domain;
converting the workflow into a function block program described in a domain specific language; and
compiling the function block program described in the domain specific language into an object code program recognizable by an OT device in the workcell.

According to another aspect of the present disclosure, an information processing apparatus is provided. The apparatus includes:
a workflow generation cell, configured to generate, based on an instruction input by a user, a workflow in an OT domain described by using a common information model, where the workflow defines an operation to be performed by a workcell in the OT domain;
a preprocessing cell, configured to convert the workflow into a function block program described in a domain specific language; and
a deployment cell, configured to deploy the function block program described in the domain specific language to runtime of a main controller of the workcell for execution, to control an OT device in the workcell to perform, based on the workflow, the operation.

According to another aspect of the present disclosure, an information processing apparatus is provided. The apparatus includes:
a workflow generation cell, configured to generate, based on an instruction input by a user, a workflow in an OT domain described by using a common information model, where the workflow defines an operation to be performed by a workcell in the OT domain;
a preprocessing cell, configured to convert the workflow into a function block program described in a domain specific language; and
a compilation cell, configured to compile the function block program described in the domain specific language into an object code program recognizable by an OT device in the workcell.

According to another aspect of the present disclosure, a computing device is provided. The device includes: at least one processor; and a memory, coupled to the at least one processor, the memory being configured to store instructions, the instructions, when executed by the at least one processor, enabling the processor to perform the foregoing method.

According to another aspect of the present disclosure, a computer-readable medium is provided, having computer-readable instructions stored thereon, the computer-readable instructions, when executed by a processor, enabling the processor to perform the foregoing method.

According to still another aspect of the present disclosure, a computer program product is provided. The computer program product is tangibly stored on a computer-readable medium and includes computer-readable instructions, and the computer-readable instructions, when executed, enable at least one processor to perform the foregoing method.

The present invention provides a method for converting a programming language by using a common information model into a domain specific language, and then compiling the domain specific language into an object code or assembly language recognizable by an OT execution engine or a controller. The method according to the present invention is particularly suitable for the field of industrial automation, such as a PLC or a robot. By using the information processing method according to the present invention, the PLC and the robot can be directly controlled without using other software, including PLC programming software or robot control software. The non-standard industrial device can be accessed through a non-standard protocol, thereby completing the compilation-level construction of an industrial automation scenario.

### BRIEF DESCRIPTION OF THE DRAWINGS

FIG. 1 is an application scenario of an information processing method in the field of industrial automation according to an embodiment of this application;
FIG. 2 is a flowchart of an exemplary process of an information processing method according to a first embodiment of the present invention;
FIG. 3 is a flowchart of an exemplary process of an information processing method according to a second embodiment of the present invention;
FIG. 4 is a flowchart of an exemplary process of step S306 in FIG. 3;
FIG. 5 is a block diagram of an exemplary configuration of an information processing apparatus according to another embodiment of the present invention;
FIG. 6 is a block diagram of an exemplary configuration of an information processing apparatus according to still another embodiment of the present invention; and
FIG. 7 is a block diagram of a computing device for performing an information processing method according to an embodiment of the present disclosure.

### Reference numerals list:

| | | | |
|---|---|---|---|
| 100: | Application scenario in the field of industrial automation | 10: | Software platform |
| 20: | Workcell | 30: | Runtime |
| 200, 300: | Information processing method | S202, S204, S206, S302, S304, S306S3O8, S310, S3062, S3064: | Step |
| 400, 500: | Information processing apparatus | 502, 602: | Workflow generation cell |
| 504, 604: | Preprocessing cell | 506: | Deployment cell |
| 606: | Compilation cell | 608: | PLC deployment cell |
| 610: | Robotic deployment cell | 700: | Computing device |
| 702: | Processor | 704: | Memory |

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of this application. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The present invention provides a method for converting a programming language by using a common information model into a domain specific language, and then compiling the domain specific language into an object code or assembly language recognizable by an OT execution engine or a controller. The method according to the present invention is particularly suitable for the field of industrial automation, such as a PLC or a robot. By using the information processing method according to the present invention, the PLC and the robot can be directly controlled without using other software, including PLC programming software or robot control software. The non-standard industrial device can be accessed through a non-standard protocol, thereby completing the compilation-level construction of an industrial automation scenario.

The embodiments of this application are described in detail below with reference to the accompanying drawings.

In this specification, the concept of "workcell (workcell)" is proposed. A workcell can be a system or device combination that can implement a relatively complete and independent control process and operation. In this embodiment, workflow creation is performed with a workcell as a basic cell, which is more in line with a feature of industrial control, can improve integration of development, and reduce complexity of development. For example, taking the field of industrial technologies as an example, the workcell can be defined based on an actual industrial scenario. For example, a process can be defined as a workcell, or a workstation in the process can be defined as a workcell, or a workstation in the workstation can be defined as a workcell. Different workcells have different processes.

In an embodiment of the present invention, the workflow may be a workflow in an OT domain. The workcell may be a workcell in the OT domain, and the device may be an OT device. The OT device may include but is not limited to: an Internet of Things (Internet of Things, IoT) device, a programmable logic controller (Programmable Logic Controller, PLC), robotics (Robotics), a manual process (Manual Process), an industrial personal computer (Industrial Personal Computer, IPC), or the like.

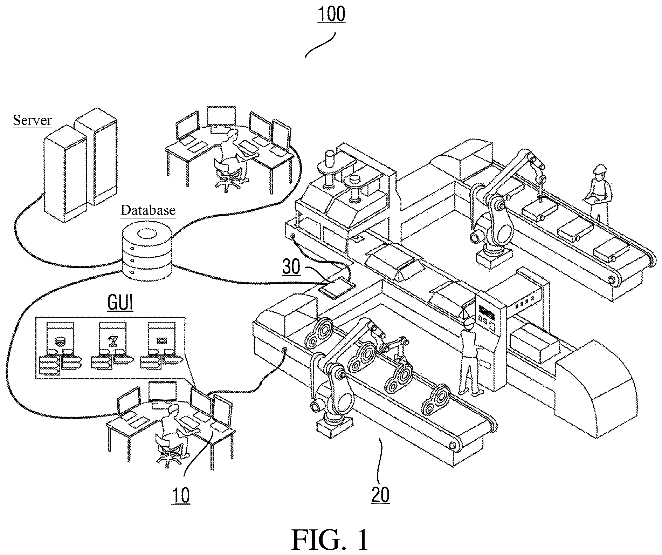

FIG. 1 shows an application scenario of an information processing method in the field of industrial automation according to an embodiment of this application. A user operates on a software platform 10 to generate a workflow in an OT domain, which defines an operation to be performed by a production line as a workcell 20 shown on the right side of FIG. 1. The generated workflow is deployed to runtime 30 of a main controller of the workcell 20, so that the operation to be performed by the production line of the workcell 20 is completed under the control of the runtime 30. In a graphical user interface GUI in FIG. 1, the user can edit the workflow in the OT domain by dragging and editing various nodes including a function block node, such as obtaining required data (such as a workpiece processing parameter) from a database & server to control the operation of the entire workcell. The workcell here is a production line, which may include a machine, a conveyor belt, a mechanical arm, people, a PLC, AGB, or the like.

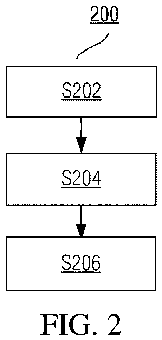

FIG. 2 is a flowchart of an exemplary process of an information processing method 200 according to a first embodiment of the present invention.

First, step S202: Generate, based on an instruction input by a user, a workflow in an OT domain described by using a common information model, where the workflow defines an operation to be performed by a workcell in the OT domain.

In a specific example, the instruction input by the user may be that the user drags and the edits a function block on a user interface of a software platform as needed, thereby editing the workflow in the OT domain. The workflow is described by using the common information model, which implements the standardization of communication between the workflow in the OT domain and main controllers of various OT devices.

Then, step S204: Convert the workflow into a function block program described in a domain specific language.

In this step, the workflow described by using the common information model is preprocessed and converted into an element required by an industrial field. Specifically, different logical nodes of the workflow can be converted into function block programs described in different domain specific languages. The information processing method according to the present invention is particularly for a PLC, a robot, and another non-standard industrial device in the field of industrial automation. Therefore, the used domain specific language also includes a domain specific languagefor the PLC, the robot, and the non-standard industrial device.

In addition, during the preprocessing, a security check (for example, removing dangerous code) and compression may be further performed on a source description language of the workflow. Details are not described in detail herein again.

The converted function block program may include: a function block program related to a PLC, a link and a logic program of the workflow, a programming language, and a robot function block programs, and the like.

For example, when a behavior tree is used to represent the workflow, the link and logic of the workflow are behavior tree logic. The programming language may be, for example, Python or the like.

Then, step S206: Deploy the function block program described in the domain specific language to runtime of a main controller of the workcell for execution, to control an OT device in the workcell to perform, based on the workflow, the operation.

A person skilled in the art may understand that an execution engine in the runtime can execute the function block program described in a domain specific language, thereby controlling/monitoring operations of the PLC, robot or another non-standard industrial device, which is not described in detail herein again.

In an specific example, step S206 includes: using a JIT compiler to compile the function block program described in the domain specific language, and deploying a compiled program to the runtime of the main controller of the workcell for execution.

The JIT (Just-In-Time) compiler is a high-performance solution for a function block execution engine. Specifically, for example, LuaJIT and WebAssembly may be used. The JIT compiler, such as PyPy, enables the function block described in domain specific languageto be executed directly on a JIT engine and then deployed to the runtime, thereby improving runtime execution performance.

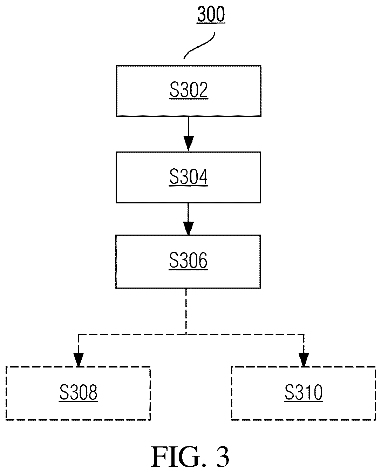

As described above, in the method according to the present invention, the OT device may include: the PLC, the robot, and the non-standard industrial device. For the PLC and the robot, an information processing method according to a second embodiment of the present invention in FIG. 3 may be further used. FIG. 3 is a flowchart of an exemplary process of an information processing method 300 according to a second embodiment of the present invention.

First, step S302: Generate, based on an instruction input by a user, a workflow in an OT domain described by a common information model, where the workflow defines an operation to be performed by a workcell in the OT domain.

Then, step S304: Convert the workflow into a function block program described in a domain specific language.

The function block program described in the domain specific language includes at least one of the following: a function block program related to a PLC, a link and a logic program of the workflow, a programming language,and a robot function block program.

The operations of steps S302 and S304 are similar to those of steps S202 and S204, which is not described in detail herein again.

In step S306 of the method 300, the function block program described in the domain specific language is further compiled into an object code program that recognizable by an OT device in the workcell.

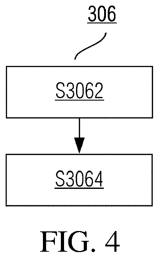

FIG. 4 is a flowchart of an exemplary process of step S306 when the OT device is a PLC.

As shown in FIG. 4, step S3062: Extract the function block program related to the PLC from the function block program described in the domain specific language. Specifically, the function block program related to the PLC can be extracted through reference.

Then, step S3064: Compile the function block program related to the PLC into assembly language code recognizable by the PLC, or
compile the function block program related to the PLC into an intermediate language recognizable by PLC programming software, and compile the intermediate language into assembly language code recognizable by the PLC.

In step S3064, the function block program related to the PLC can be directly compiled into the assembly language code, such as MachineCode7 or another PLC assembly language, and the PLC can directly execute the assembly language code.

In this way, the assembly language code executable by the PLC can be directly generated without using other PLC programming software.

In addition, in a specific example, when there is a PLC-based software platform compatible with an IEC61131-3 standard, the function block program described in the domain specific language can be first converted into an SCL (Structured Control Language) format, and then the software platform can further compile the SCL format into the assembly language code recognizable by the PLC.

In this way, the solution in the present invention can be integrated with an existing PLC software platform.

When the OT device is the PLC, the method 300 may further include step S308: deploying the assembly language code on the PLC to control the PLC to perform, based on the workflow, the operation.

When the OT device is the robot, step S306 may specifically include: compiling the robot function block program in the function block program described in the domain specific language into a robot script program executable by a robot controller.

Specifically, different interpreters for different robot scripts in an industrial field can be combined into a compiler, which can provide a selector to recognize different robot scripts and provide a unified interface for invoking.

In this way, a method is provided to run robot scripts directly in robot controllers provided by different manufacturers.

When the OT device is the robot, the method 300 further includes step S310: deploying the robot script program on the robot controller to control the robot to perform, based on the workflow, the operation; or deploying the robot script program to runtime of a main controller of the workcell, and deploying the robot script program on the robot controller through an adapter of the runtime, to control the robot to perform based on the workflow, the operation.

According to the information processing method in the present invention, the PLC and the robot can be directly controlled without using other software, including PLC programming software or robot control software. The non-standard industrial device can be accessed through a non-standard protocol, thereby completing the compilation-level construction of an industrial automation scenario.

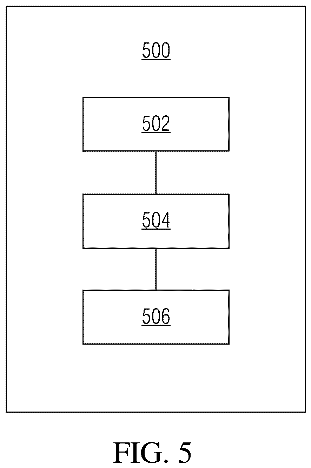

FIG. 5 is a block diagram of an exemplary configuration of an information processing apparatus 500 corresponding to the information processing method according to a first embodiment of the present invention.

As shown in FIG. 5, the information processing apparatus 500 includes: a workflow generation cell 502, a preprocessing cell 504, and a deployment cell 506.

The workflow generation cell 502 is configured to generate, based on an instruction input by a user, a workflow in an OT domain described by using a common information model, where the workflow defines an operation to be performed by a workcell in the OT domain.

The preprocessing cell 504 is configured to convert the workflow into a function block program described in a domain specific language.

The deployment cell 506 is configured to deploy the function block program described in the domain specific language to runtime of a main controller of the workcell for execution, to control an OT device in the workcell to perform, based on the workflow, the operation.

The details of the operations and functions of the various parts of the information processing apparatus 500 may be the same as or similar to the relevant parts of the embodiment of the information processing method 200 of the present invention described with reference to FIG. 2, which is not described in detail herein again.

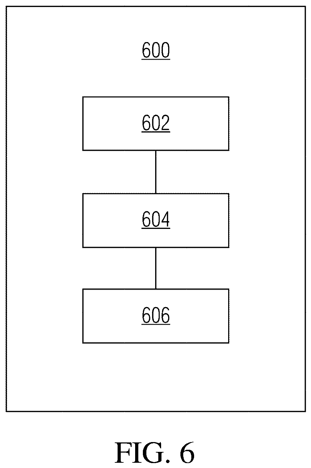

FIG. 6 is a block diagram of an exemplary configuration of an information processing apparatus 600 corresponding to the information processing method according to a second embodiment of the present invention.

As shown in FIG. 6, the information processing apparatus 600 includes: a workflow generation cell 602, a preprocessing cell 604, and a compilation cell 606.

The workflow generation cell 602 is configured to generate, based on an instruction input by a user, a workflow in an OT domain described by using a common information model, where the workflow defines an operation to be performed by a workcell in the OT domain.

The preprocessing cell 604 is configured to convert the workflow into a function block program described in a domain specific language.

The compilation cell 606 is configured to compile the function block program described in the domain specific language into an object code program recognizable by an OT device in the workcell.

In this embodiment, the OT device may be a PLC or a robot.

When the OT device is the PLC, the compilation cell 606 may be further configured to extract a function block program related to the PLC from the function block program described in the domain specific language; and compile the function block program related to the PLC into assembly language code recognizable by the PLC, or compile the function block program related to the PLC into an intermediate language recognizable by PLC programming software, and then compile the intermediate language into assembly language code recognizable by the PLC.

In this case, the information processing apparatus 600 may further include a PLC deployment cell 608, which is configured to deploy the assembly language code to the PLC to control the PLC to perform, based on the workflow, the operation.

When the OT device is the robot, the compilation cell 606 may be further configured to compile the robot function block program in the function block program described in the domain specific language into a robot script program executable by a robot controller.

In this case, the information processing apparatus 600 may further include a robotic deployment cell 610, which is configured to deploy the robot script program on the robot controller to control the robot to perform, based on the workflow, the operation; or deploy the robot script program to runtime of a main controller of the workcell, and deploy the robot script program on the robot controller through an adapter of the runtime, to control the robot to perform based on the workflow, the operation.

The details of the operations and functions of the various parts of the information processing apparatus 600 may be the same as or similar to the relevant parts of the embodiment of the information processing method 300 of the present invention described with reference to FIG. 3, which is not described in detail herein again.

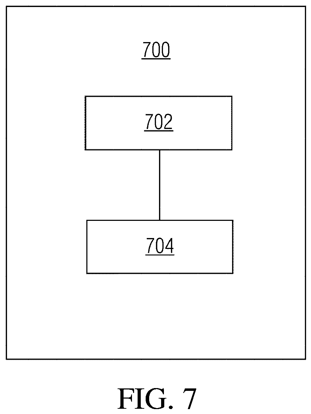

FIG. 7 is a block diagram of a computing device 700 for performing an information processing method according to an embodiment of the present disclosure. According to an embodiment, the computing device 700 may include at least one processor 702 that executes at least one computer-readable instruction (that is, the foregoing element implemented in software form) stored or encoded in a computer-readable storage medium (that is, a memory 704).

It should be understood that, when the computer-readable instruction stored in the memory 704 is executed, the at least one processor 702 is enabled to perform the foregoing various operations and functions described with reference to FIG. 1 to FIG. 6 in the embodiments of the present disclosure.

In addition, an embodiment of this application further provides a computer-readable medium, having computer-readable instructions stored thereon. When the computer-readable instructions are executed by a processor, the processor is enabled to perform the foregoing various operations and functions described with reference to FIG. 1 to FIG. 6 in the embodiments of the present disclosure. Embodiments of the computer-readable medium includes a floppy disk, a hard disk drive, a magneto-optical disk, an optical disk (for example, a CD-ROM, a CD-R, a CD-RW, a DVD-ROM, a DVD-RAM, a DVD-RW, or a DVD+RW), a magnetic tape, a non-volatile storage card, and a ROM. Optionally, the computer-readable instructions may be downloaded from a server computer or a cloud over a communication network.

According to an embodiment, a computer program including computer-executable instructions is provided. When the computer-executable instructions are executed, at least one processor is enabled to perform the foregoing various operations and functions described with reference to FIG. 1 to FIG. 6 in the embodiments of the present disclosure.

According to an embodiment, a computer program product including computer-executable instructions is provided. When the computer-executable instructions are executed, at least one processor is enabled to perform the foregoing various operations and functions described with reference to FIG. 1 to FIG. 6 in the embodiments of the present disclosure.

It may be understood that the embodiments in this specification are all described in a progressive manner, for same or similar parts in the embodiments, reference may be made to these embodiments, and each embodiment focuses on a difference from other embodiments.

The foregoing describes specific embodiments of this specification. Other embodiments fall within the scope of the appended claims. In some embodiments, the actions or steps recorded in the claims may be performed in sequences different from those in the embodiments and an expected result may still be achieved. In addition, the processes depicted in the accompanying drawings is not necessarily performed in the specific order or successively to achieve an expected result. In some implementations, multitasking and parallel processing may be feasible or beneficial.

Not all steps and cells in the procedures and the diagrams of the system structures are necessary, and some steps or cells may be omitted according to an actual requirement. The apparatus structure described in the embodiments may be a physical structure or a logical structure. That is, some cells may be implemented by the same physical entity, or some cells may be implemented by a plurality of physical entities, or may be implemented by some components in a plurality of independent devices together.

Exemplary embodiments are described above in combination with specific implementations illustrated in the accompanying drawings, but this does not represent all embodiments that may be implemented or fall within the protection scope of the claims. A term "exemplary" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some embodiments, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. For a person of ordinary skill in the art, various modifications on the content of the present disclosure are obvious. In addition, a general principle defined in this specification may be applied to other variants without departing from the protection scope of the content of the present disclosure. Therefore, the content of the present disclosure is not limited to the examples and designs described in this specification, but is consistent with the widest range conforming to the principle and novelty disclosed in this specification.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. An information processing method, comprising:
generating, based on an instruction input by a user, a workflow in an OT domain described by using a common information model, wherein the workflow defines an operation to be performed by a workcell in the OT domain;
converting the workflow into a function block program described in a domain specific language; and
deploying the function block program described in the domain specific language to runtime of a main controller of the workcell for execution, to control an OT device in the workcell to perform, based on the workflow, the operation.

2. The method according to claim 1, wherein the deploying the function block program described in the domain specific language to runtime of a main controller of the workcell for execution comprises:
using a JIT compiler to compile the function block program described in the domain specific language, and deploying a compiled program to the runtime of the main controller of the workcell for execution.

3. The method according to claim 1 or 2, wherein the function block program described in the domain specific language comprises at least one of the following: a function block program related to a PLC, a link and a logic program of the workflow, a programming language, and a robot function block program.

4. The method according to claim 1 or 2, wherein the OT device comprises: a PLC, a robot, and a non-standard industrial device.

5. An information processing method, comprising:
generating, based on an instruction input by a user, a workflow in an OT domain described by using a common information model, wherein the workflow defines an operation to be performed by a workcell in the OT domain;
converting the workflow into a function block program described in a domain specific language; and
compiling the function block program described in the domain specific language into an object code program recognizable by an OT device in the workcell.

6. The method according to claim 5, wherein the function block program described in the domain specific language comprises at least one of the following: a function block program related to a PLC, a link and a logic program of the workflow, a programming language,and a robot function block program.

7. The method according to claim 6, wherein the OT device comprises: the PLC and a robot.

8. The method according to claim 7, wherein the compiling the function block program described in the domain specific language into an object code program recognizable by an OT device in the workcell comprises:
extracting the function block program related to the PLC from the function block program described in the domain specific language; and
compiling the function block program related to the PLC into assembly language code recognizable by the PLC, or
compiling the function block program related to the PLC into an intermediate language recognizable by PLC programming software, and compiling the intermediate language into assembly language code recognizable by the PLC.

9. The method according to claim 8, further comprising: deploying the assembly language code on the PLC to control the PLC to perform, based on the workflow, the operation.

10. The method according to claim 7, wherein the compiling the function block program described in the domain specific language into an object code program recognizable by an OT device in the workcell comprises:
compiling the robot function block program in the function block program described in the domain specific language into a robot script program executable by a robot controller.

11. The method according to claim 10, further comprising:
deploying the robot script program on the robot controller to control the robot to perform, based on the workflow, the operation, or
deploying the robot script program to runtime of a main controller of the workcell, and deploying the robot script program on the robot controller through an adapter of the runtime, to control the robot to perform, based on the workflow, the operation.

12. An information processing apparatus, comprising:
a workflow generation cell, configured to generate, based on an instruction input by a user, a workflow in an OT domain described by using a common information model, wherein the workflow defines an operation to be performed by a workcell in the OT domain;
a preprocessing cell, configured to convert the workflow into a function block program described in a domain specific language; and
a deployment cell, configured to deploy the function block program described in the domain specific language to runtime of a main controller of the workcell for execution, to control an OT device in the workcell to perform, based on the workflow, the operation.

13. An information processing apparatus, comprising:
a workflow generation cell, configured to generate, based on an instruction input by a user, a workflow in an OT domain described by using a common information model, wherein the workflow defines an operation to be performed by a workcell in the OT domain;
a preprocessing cell, configured to convert the workflow into a function block program described in a domain specific language; and
a compilation cell, configured to compile the function block program described in the domain specific language into an object code program recognizable by an OT device in the workcell.

14. A computing device (700), comprising:
at least one memory (702), configured to store computer-readable code; and
at least one processor (704), configured to invoke the computer-readable code to perform the method according to any one of claims 1 to 4 or 5 to 11.

15. A computer-readable medium, having computer-readable instructions stored thereon, the computer-readable instructions, when executed by a processor, enabling the processor to perform the method according to any one of claims 1 to 4 or 5 to 11.

16. A computer program product, tangibly stored on a computer-readable medium and comprising computer-readable instructions, the computer-readable instructions, when executed, enabling at least one processor to perform the method according to any one of claims 1 to 4 or 5 to 11.
